(19) Europäisches Patentamt
European Patent Office
Office européen des brevets

(11) Veröffentlichungsnummer: **0 225 553 B1**

(12) **EUROPÄISCHE PATENTSCHRIFT**

(45) Veröffentlichungstag der Patentschrift: **19.08.92**

(51) Int. Cl.[5]: **C09B 63/00**, C09B 29/50, C08K 5/42

(21) Anmeldenummer: **86116505.8**

(22) Anmeldetag: **27.11.86**

Die Akte enthält technische Angaben, die nach dem Eingang der Anmeldung eingereicht wurden und die nicht in dieser Patentschrift enthalten sind.

(54) **Azofarblacke.**

(30) Priorität: **10.12.85 DE 3543512**

(43) Veröffentlichungstag der Anmeldung:
**16.06.87 Patentblatt 87/25**

(45) Bekanntmachung des Hinweises auf die Patenterteilung:
**19.08.92 Patentblatt 92/34**

(84) Benannte Vertragsstaaten:
**CH DE FR GB LI**

(56) Entgegenhaltungen:
**EP-A- 0 073 972**
**DE-A- 2 621 529**
**DE-A- 3 220 334**
**FR-A- 2 064 913**
**GB-A- 874 220**

(73) Patentinhaber: **BAYER AG**
**W-5090 Leverkusen 1 Bayerwerk(DE)**

(72) Erfinder: **Zimmermann, Gesine, Dr.**
**Dörpfeldstrasse 8**
**W-5632 Wermelskirchen(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



Rank Xerox (UK) Business Services

## Beschreibung

Die Erfindung betrifft Azofarblacke der Formel

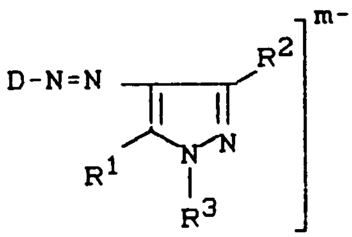 $\frac{m}{l}\,M^{l+}$ (I)

in der

D = 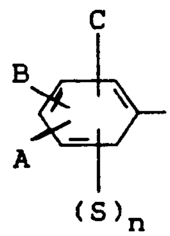 oder 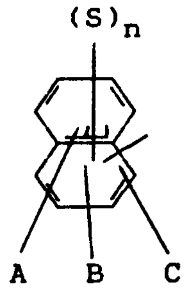 ,

$R^1$ = -OH oder $-NR^4R^5$,

$R^2$ = 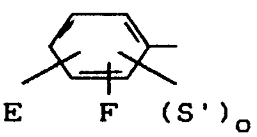 oder 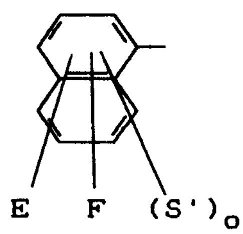

und für den Fall, daß $R^1 = -NR^4R^5$
zusätzlich H, oder Carboxylat, Alkyl, insbesondere Methyl,

$R^3$ = 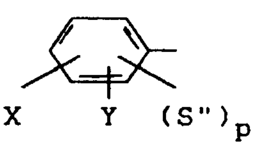 oder 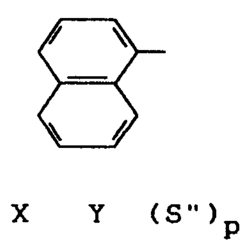 ,

| | |
|---|---|
| $R^4$, $R^5$ = | H, Alkyl, Cycloalkyl, Aralkyl, Aryl, wobei die genannten Kohlenwasserstoffreste substituiert sein können, |
| S, S', S'' = | Carboxylat, Sulfonat, |
| A, B, C, E, F, X, Y = | H, $-CF_3$, Halogen, $-NO_2$, -CN, $R^6$, $-OR^6$, $-NR^6R^7$, $-NH_2$, $-SO_2NH_2$, $-SO_2NR^6R^7$, $-CONH_2$, $-CONR^6R^7$, $-NHCOR^6$, |
| M = | Calcium, |

| | |
|---|---|
| n, o, p = | 0, 1, 2, |
| m = | n + o + p und für den Fall, daß $R^2$ = -COOH, n + o + p + 1, mit der Bedingung 1 ≦ m ≦ 3, |
| 1 = | Wertigkeit von M, |
| $R^6$, $R^7$ = | Alkyl, Cycloalkyl, Aralkyl, Aryl, wobei die genannten Kohlenwasserstoffreste substituiert sein können. |

Aus DE-A-3 220 334, DE-A-2 621 529 und FR-A-2 064 913 sind zwar bereits entsprechende Farbsalze mit anderen Kationen bekannt, jedoch sind diese insbesondere zum Färben von Kunststoffen unbefriedigend oder ungeeignet.

m steht vorzugsweise für 2, d. h., daß der dem Farblack zugrunde liegende anionische Teil zwei Carboxylat- und/ oder Sulfonatgruppen aufweist, die sich besonders bevorzugt in D und $R^3$ befinden.

Alkyl ($R^2$, $R^4$, $R^5$, $R^6$, $R^7$) bezeichnet bevorzugt $C_1$-$C_4$-Alkyl, insbesondere Methyl und Ethyl.

Cycloalkyl ($R^4$, $R^5$, $R^6$, $R^7$) bezeichnet bevorzugt $C_3$-$C_7$-Cycloalkyl, insbesondere Cyclopentyl und Cyclohexyl.

Aralkyl ($R^4$, $R^5$, $R^6$, $R^7$) bezeichnet bevorzugt Phenyl-$C_1$-$C_4$-alkyl, insbesondere Benzyl und Phenethyl.

Aryl ($R^4$, $R^5$, $R^6$, $R^7$) bezeichnet bevorzugt Phenyl und Naphthyl.

Halogen (A, B, C, E, F, X, Y) bzeichnet bevorzugt Chlor, Brom und Fluor.

D steht bevorzugt für

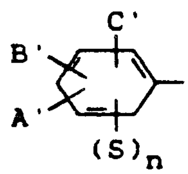.

(In dieser und den folgenden Formeln haben wiederkehrende Symbole die bereits in Formel I angegebenen Bedeutungen und Vorzugsbedeutungen).

A', B', C' = H, Cl, Br, $-CH_3$, $-C_2H_5$, $-OCH_3$, $-OC_2H_5$, - $NO_2$, $-NHCOCH_3$.

Weitere Vorzugsbedeutungen für D sind:

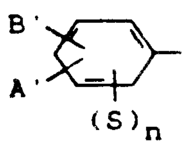 und 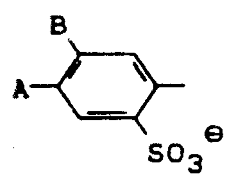

Individuelle Beispiele für Reste D sind:

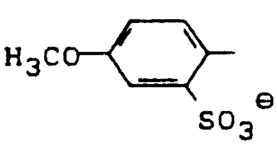, 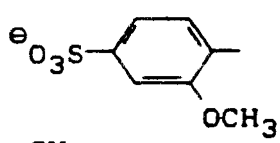, 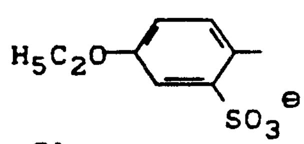,

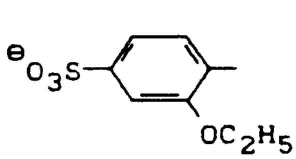, 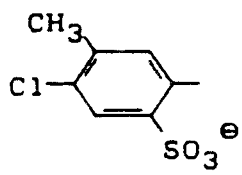, 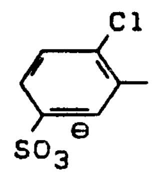, 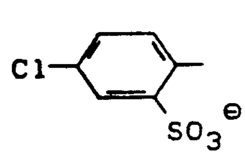,

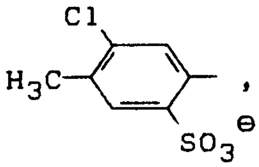, 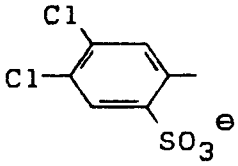, 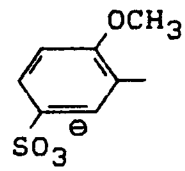

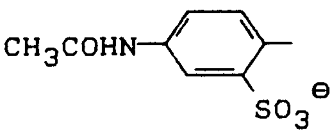, 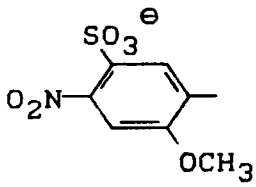, 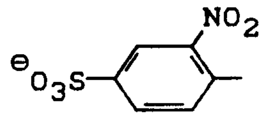.

$R^1$ steht bevorzugt für -OH oder $-NH_2$,

Für $R^2$ kommen folgende Vorzugsbedeutungen infrage:

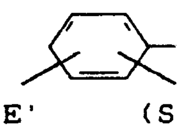, 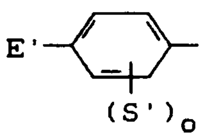, 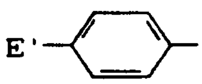, 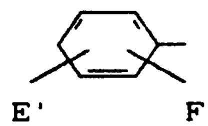

und $-CH_3$, für den Fall, daß $R^1 = -NR^4R^5$.

E' = H, Cl, Br, $-CH_3$, $-C_2H_5$, $-OCH_3$, $-OC_2H_5$, $-NHCOCH_3$, $-NO_2$.

$R^3$ hat folgende Vorzugsbedeutung:

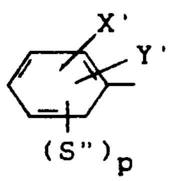

X' = H, -Cl, -Br, $-CH_3$, $-C_2H_5$;

Y' = H, -Cl, -Br, $-OCH_3$, $-OC_2H_5$, -O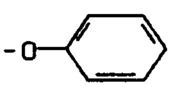

p ist bevorzugt 1 und S" steht vorzugsweise in 2'- oder 3'-Stellung des Phenylrings.

Individuelle Beispiele für Reste $R^3$ sind:

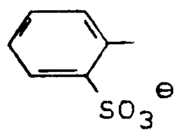 , 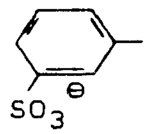 , 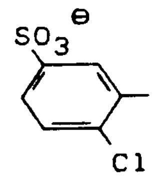 ,

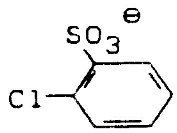 , 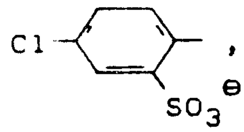 , 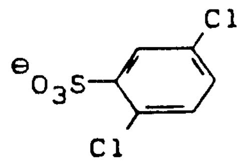 ,

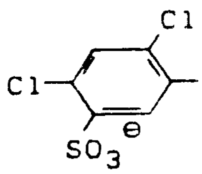 , 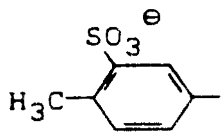 , 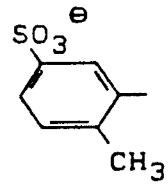 ,

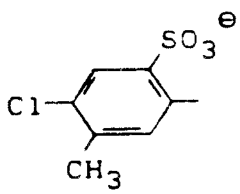 , 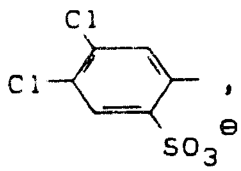 , 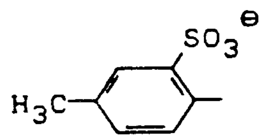 ,

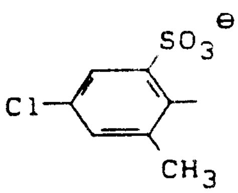 , 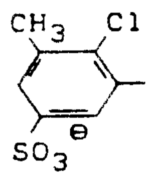 , 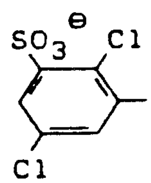 .

Durch Kombination der vorstehend genannten bevorzugten Reste entstehen besonders bevorzugte Farbstoffe. Die folgende Tabelle zeigt einige dieser Kombinationen:

Tabelle

| D | $R^1$ | $R^2$ | $R^3$ |
|---|---|---|---|
| 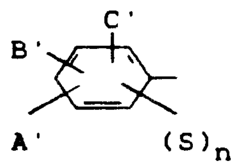 | -OH | 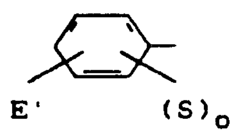 | 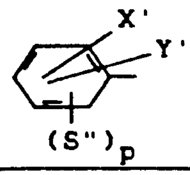 |
| " | $-NH_2$ | " | " |
| " | -OH | 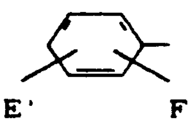 | " |
| " | $-NH_2$ | " | " |
| " | $-NH_2$ | $-CH_3$ | " |
| 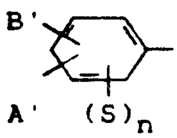 | -OH | 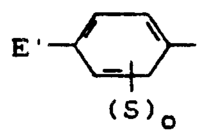 | " |
| " | $-NH_2$ | " | " |
| " | $-NH_2$ | $-CH_3$ | " |
| 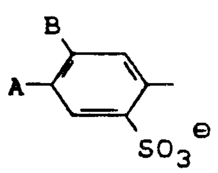 | -OH | 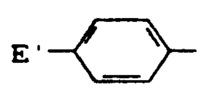 | " |
| " | $-NH_2$ | $-CH_3$ | " |
| " | $-NH_2$ | 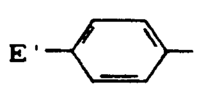 | " |

Mischungen von Azofarblacken der Formel I mit verschiedenen M, z. B. Ca und Sr, zeigen ebenfalls gute Eigenschaften. Die erfindungsgemäßen Azofarblacke können in verschiedenen Kristallmodifikationen auftreten.

Zu erwähnen ist, daß die erfindungsgemäßen Farblacke im allgemeinen von der Herstellung her mehr oder minder große Anteile an Ammonium- oder Alkalimetallionen, z. B. Na, K, Li, enthalten können.

Die Herstellung der Verbindungen der Formel I erfolgt gemäß literaturbekannten Verfahren.

So erhält man die Iminopyrazolone gemäß Formel I durch Umsetzung der entsprechenden Hydrazine mit dimerem Acetonitril bzw. den entsprechenden $\beta$-Ketonitrilen. Die 3-Arylpyrazolone lassen sich u. a. durch Kondensation der entsprechenden Benzoylessigester oder -amide mit Hydrazinen gewinnen. Die Reaktionen können sowohl im stark und schwach sauren als auch im neutralen und alkalischen Gebiet ablaufen,

Zur Herstellung der Azofarblacke der Formel I kann man Amine der Formel

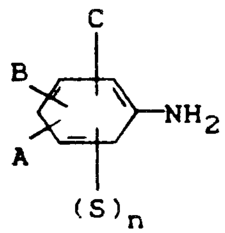

oder

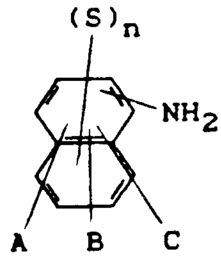

,

diazotieren und auf Verbindungen der Formel

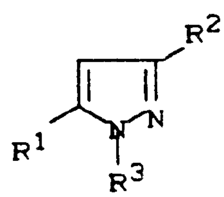

kuppeln und die Farbstoffe in die gewünschten Metallsalze überführen. Die Umsetzungen können in Gegenwart nichtionogener, anion- oder kationaktiver Dispergiermittel und/oder unter Zusatz von oder in organischen Lösungsmitteln erfolgen.

Zur Erzielung bestimmter Primäreigenschaften ist es zweckmäßig, das Kupplungsgemisch einige Zeit zu erhitzen, gegebenenfalls zum Kochen oder unter Druck auf über 100 ° C zu bringen.

Besonders gut verarbeitbare Produkte erhält man, wenn die Farblacke nach der Kupplung als feuchte Preßkuchen oder als getrocknete Pulver einer Nachbehandlung mit organischen Lösungsmitteln wie Pyridin, Dimethylformamid, Alkoholen wie Ethanol, Methanol, Isopropanol, Butanol, Toluol, Xylol, Glykol, Glykolmonomethylether, Eisessig, Chlorbenzol, Dichlorbenzol, Nitrobenzol oder Gemischen von diesen gegebenenfalls mit Wasser bei Rückflußtemperatur oder unter Druck bei erhöhter Temperatur unterwirft oder eine Mahlung der Farblacke unter Zusatz von Mahlhilfsmitteln anschließt. Gute Ergebnisse lassen sich auch durch Nachbehandlung der Produkte, suspendiert in Wasser, den obengenannten organischen Lösungsmitteln oder Gemischen von diesen mit sich selbst oder Wasser mit Ultraschall bei Raum- oder erhöhter Temperatur erzielen.

Die isolierten Farblacke können einer thermischen Nachbehandlung, z. B. einer Trocknung bei erhöhter Temperatur, bevorzugt bei 40 ° C bis 150 ° C, auch Sprühtrocknung, unterworfen werden.

Verbindungen der Formel I sind wertvolle Pigmente. Besonders hochwertige Pigmente stellen die Erdalkalimetall- oder Manganfarblacke dar. Diese lassen sich auch aus den in der Regel leichter löslichen Ammonium- und Alkalimetallfarblacken herstellen. Insbesondere eignen sich die erfindungsgemäßen Pigmente zur Einfärbung von Kunststoffen. Man erhält grünstichig gelbe bis rotstichig orange und braune Einfärbungen. Besonders zu erwähnen sind Polyolefine wie Polyethylen und Polypropylen sowie Polystyrol mit Butadien, modifiziertes Polystyrol, Polycarbonat, Polyvinylchlorid, ABS und Polymerblends wie Polycarbonat/ABS, Polyphenylenoxid/Styrol-Butadien, Ethylenpropylencopolymerisat/Polypropylen und Polycarbonat/ Polybutylenterephthalat.

Die Farblacke besitzen eine ausgezeichnete Thermostabilität, Lösungsmittel-, Wasser-, Weichmacher- und Migrierechtheit, hohe Farbstärke sowie sehr gute Licht- und Wetterbeständigkeit. Die Pigmente eignen sich auch zum Färben von Lacken, Kautschuk, natürlichen und synthetischen Harzen, Kunstseide aus Viskose und Zellulosethern bzw. -estern, Polyamiden, Polyurethanen, Polyglykolterephtalaten und Polyacrylnitril in der Spinnmasse.

Beispiel 1

6,4 g 1-Amino-4-chlor-5-methylbenzol-2-sulfonsäure werden in 55 ml Wasser mit 5 ml Natronlauge gelöst und mit 9,7 ml konzentrierter Salzsäure gefällt. Man kühlt mit Eis auf 0 - 5°C und diazotiert durch Zugabe von 6,8 ml einer 30 %iger Natriumnitritlösung.

Die Diazotierung wird zu einer Lösung von 9,5 g 1-(3'-Sulfophenyl)-3-phenyl-5-pyrazolon in 55,4 ml 25 %iger Natriumacetatlösung gegeben. Nach beendeter Kupplung wird auf 80°C geheizt und 24 g Calciumchlorid zugegeben. Nach einer Stunde bei 80°C wird abgesaugt, gewaschen und bei 80°C getrocknet.

Man erhält 16 g eines stark rotstichig gelben Farblackes der Formel

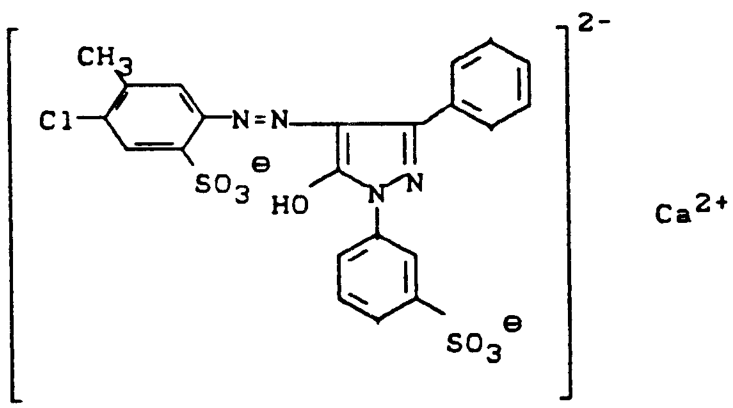

Beispiel 2:

7 g 1-Amino-3,4-dichlorbenzol-6-sulfonsäure werden, wie in Beispiel 1 angegeben, diazotiert. Nach beendeter Umsetzung werden zum Reaktionsgemisch 44 ml Wasser und 7,6 g 1-(3'-Sulfophenyl)-3-methyl-5-imino-pyrazolon gegeben, mit 25 %iger Ammoniaklösung der pH-Wert auf 6 - 6,5 gestellt und bis zur Beendigung der Kupplung nachgerührt. Es wird auf 80°C erhitzt, 24 g Calciumchlorid zugesetzt und eine Stunde bei 80°C nachgerührt.

Nach Absaugen des entstandenen Pigmentes, Waschen mit Wasser und Sprühtrocknung erhält man 15 g eines grünstichig gelben Farblackes der Formel

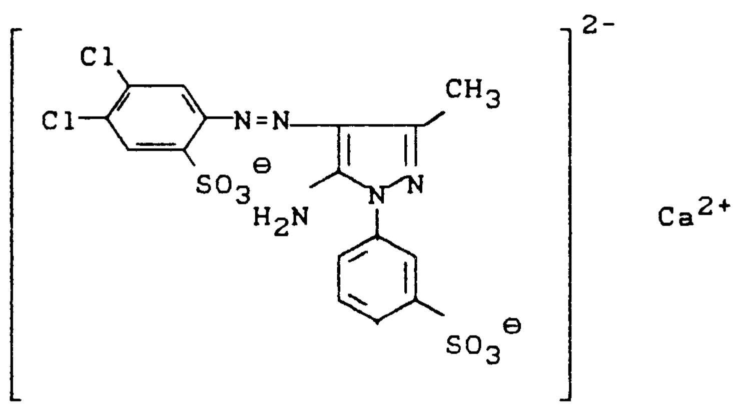

Beispiel 3:

Nach einem Versuch gemäß Beispiel 1 wird der wäßrige Preßkuchen in Butanol entwässert, abgesaugt, gewaschen und bei 50°C getrocknet. Man erhält 15 g eines gelben Farblackes.

Beispiel 4:

Analog zu Beispiel 3 wird der wäßrige Preßkuchen in Butanol entwässert, die erhaltene Suspension mit Ultraschall behandelt, abgesaugt, gewaschen und bei 50°C getrocknet. Man erhält 13,2 g eines grünstichig gelben Farblackes mit verbesserter Dispergierbarkeit.

Analog zu den Beispielen 1 - 4 wurden die im folgenden genannten Beispiele 5-161 hergestellt.

| Bsp. | Diazokomponente | Kupplungskomponente | Me | Nuance |
|---|---|---|---|---|
| 5 | 1-Amino-3,4-dichlor-benzol-6-sulfonsäure | 1-(2'-Sulfophenyl)-3-methyl-5 iminopyrazolon | $Ca^{2+}$ | gelb |
| 6 | " | 1-(2'-Chlor-5'-sulfophenyl)-3-methyl-5-iminopyrazolon | $Ca^{2+}$ | gelb |
| 7 | " | 1-(2',5'-Dichlor-4'-sulfophenyl)-3-methyl-5-iminopyrazolon | $Ca^{2+}$ | gelb |
| 8 | " | 1-(4'-Chlor-3'-sulfophenyl)-3-methyl-5-imino-pyrazolon | $Ca^{2+}$ | gelb |
| 9 | " | 1-(2',4'-Dichlor-5'-sulfophenyl)-3-methyl-5-iminopyrazolon | $Ca^{2+}$ | gelb |
| 10 | " | 1-(4'-Methyl-3'-sulfophenyl)-3-methyl-5-iminopyrazolon | $Ca^{2+}$ | gelb |
| 11 | " | 1-(6'-Methyl-3'-sulfophenyl)-3-methyl-5-iminopyrazolon | $Ca^{2+}$ | gelb |
| 12 | " | 1-(4'-Chlor-5'-methyl-2'-sulfophenyl)-3-methyl-5-iminopyrazolon | $Ca^{2+}$ | gelb |
| 13 | " | 1-(3'-Sulfophenyl)-3-phenyl-5-iminopyrazolon | $Ca^{2+}$ | gelb |
| 14 | " | 1-(2'-Sulfophenyl)-3-phenyl-5-iminopyrazolon | $Ca^{2+}$ | rotstichig gelb |
| 15 | " | 1-(2'-Chlor-5'-sulfophenyl)-3-phenyl-5-iminopyrazolon | $Ca^{2+}$ | gelb |

| Bsp. | Diazokomponente | Kupplungskomponente | Me | Nuance |
|---|---|---|---|---|
| 16 | 1-Amino-3,4-dichlor-benzol-6-sulfonsäure | 1-(4'-Chlor-3'-sulfophenyl)-3-phenyl-5-iminopyrazolon | $Ca^{2+}$ | gelb |
| 17 | " | 1-(3',4'-Dichlor-6'-sulfophenyl)-3-phenyl-5-iminopyrazolon | $Ca^{2+}$ | gelb |
| 18 | " | 1-(4'-Methyl-3'-sulfophenyl)-3-phenyl-5-iminopyrazolon | $Ca^{2+}$ | gelb |
| 19 | " | 1-(4'-Methyl-2'-sulfophenyl)-3-phenyl-5-iminopyrazolon | $Ca^{2+}$ | gelb |
| 20 | " | 1-(4'-Chlor-6'-methyl-2'-sulphophenyl)-3-phenyl-5-iminopyrazolon | $Ca^{2+}$ | gelb |
| 21 | " | 1-(2'-Sulfophenyl)-3-phenyl-pyrazolon-5 | $Ca^{2+}$ | gelb |
| 22 | " | 1-(3'-Sulfophenyl)-3-phenyl-pyrazolon-5 | $Ca^{2+}$ | gelbstichig orange |
| 23 | " | 1-(2'-Chlor-5'-sulfophenyl)-3-phenyl-pyrazolon-5 | $Ca^{2+}$ | gelb |
| 24 | " | 1-(4'-Chlor-3'-sulfophenyl)-3-phenyl-pyrazolon-5 | $Ca^{2+}$ | rotstichig gelb |
| 25 | " | 1-(4'-Chlor-2'-sulfophenyl)-3-phenyl-pyrazolon-5 | $Ca^{2+}$ | rotstichig gelb |

| Bsp. | Diazokomponente | Kupplungskomponente | Me | Nuance |
|---|---|---|---|---|
| 26 | 1-Amino-3,4-dichlor-benzol-6-sulfonsäure | 1-(2',4'-Dichlor-5'-sulfophenyl)-3-phenyl-pyrazolon-5 | $Ca^{2+}$ | gelb |
| 27 | " | 1-(4'-Methyl-3'-sulfophenyl)-3-phenyl-pyrazolon-5 | $Ca^{2+}$ | rotstichig gelb |
| 28 | " | 1-(6'-Methyl-3'-sulfophenyl)-3-phenyl-pyrazolon-5 | $Ca^{2+}$ | rotstichig gelb |
| 29 | " | 1-(4'-Chlor-5'-methyl-2'-sulfophenyl)-3-phenyl-pyrazolon-5 | $Ca^{2+}$ | rotstichig gelb |
| 30 | " | 1-(3'-Sulfophenyl)-3-(4'-chlorphenyl)-pyrazolon-5 | $Ca^{2+}$ | orange |
| 31 | " | 1-(4'-Chlor-3'-sulfophenyl)-3-(4'-chlor-phenyl)-pyrazolon-5 | $Ca^{2+}$ | rotstichig gelb |
| 32 | " | 1-(2',5'-Dichlor-4'-sulfophenyl)-3-(4'-chlorphenyl)-pyrazolon-5 | $Ca^{2+}$ | gelb |
| 33 | " | 1-(4'-Methyl-3'-sulfophenyl)-3-(4'-chlor-phenyl)-pyrazolon-5 | $Ca^{2+}$ | rotstichig gelb |
| 34 | " | 1-(4'-Chlor-5'-methyl-2'-sulfophenyl)-3-(4'-chlorphenyl)-pyrazolon-5 | $Ca^{2+}$ | rotstichig gelb |
| 35 | " | 1-(3'-Sulfophenyl)-3-(4'-methoxyphenyl)-pyrazolon-5 | $Ca^{2+}$ | braunsti-chig gelb |

| Bsp. | Diazokomponente | Kupplungskomponente | Me | Nuance |
|---|---|---|---|---|
| 36 | " | 1-(4'-Chlor-3'-sulfophenyl)-3-(4'-methoxyphenyl)-pyrazolon-5 | $Ca^{2+}$ | braunstichig gelb |
| 37 | " | 1-(2',5'-Dichlor-4'-sulfophenyl)-3-(4'-methoxyphenyl)-pyrazolon-5 | $Ca^{2+}$ | rotbraunstichig gelb |
| 38 | " | 1-(4'-Chlor-5'-methyl-2'-sulfophenyl)-3-(4'-methoxyphenyl)-pyrazolon-5 | $Ca^{2+}$ | rotbraunstichig gelb |
| 39 | " | 1-(3'-Sulfophenyl)-3-(4'-nitrophenyl)-pyrazolon-5 | $Ca^{2+}$ | orange |
| 40 | 1-Amino-4-chlor-5-methyl-benzol-2-sulfonsäure | 1-(3'-Sulfophenyl)-3-methyl-5-iminopyrazolon | $Ca^{2+}$ | grünstichig gelb |
| 41 | " | 1-(2'-Sulfophenyl)-3-methyl-5-iminopyrazolon | $Ca^{2+}$ | gelb |
| 42 | " | 1-(2'-Chlor-5'-sulfophenyl)-3-methyl-5-iminopyrazolon | $Ca^{2+}$ | gelb |
| 43 | " | 1-(2',5'-Dichlor-4'-sulfophenyl)-3-methyl-5-iminopyrazolon | $Ca^{2+}$ | grünstichig gelb |
| 44 | " | 1-(4'-Chlor-3'-sulfophenyl)-3-methyl-5-iminopyrazolon | $Ca^{2+}$ | grünstichig gelb |
| 45 | " | 1-(2',4'-Dichlor-5'-sulfophenyl)-3-methyl-5-iminopyrazolon | $Ca^{2+}$ | grünstichig gelb |

| Bsp. | Diazokomponente | Kupplungskomponente | Me | Nuance |
|---|---|---|---|---|
| 46 | 1-Amino-4-chlor-5-methyl-benzol-2-sulfonsäure | 1-(4'-Methyl-3'-sulfophenyl)-3-methyl-5-iminopyrazolon | $Ca^{2+}$ | grünstichig gelb |
| 47 | " | 1-(6'-Methyl-3'-sulfophenyl)-3-methyl-5-iminopyrazolon | $Ca^{2+}$ | gelb |
| 48 | " | 1-(4'-Chlor-5'-methyl-2-sulfophenyl)-3-methyl-5-iminopyrazolon | $Ca^{2+}$ | gelb |
| 49 | " | 1-(3'-Sulfophenyl)-3-phenyl-5-iminopyrazolon | $Ca^{2+}$ | gelb |
| 50 | " | 1-(2'-Sulfophenyl)-3-phenyl-5-iminopyrazolon | $Ca^{2+}$ | gelb |
| 51 | " | 1-(2'-Chlor-5'-sulfophenyl)-3-phenyl-5-iminopyrazolon | $Ca^{2+}$ | gelb |
| 52 | " | 1-(4'-Chlor-3'-sulfophenyl)-3-phenyl-5-iminopyrazolon | $Ca^{2+}$ | gelb |
| 53 | " | 1-(3',4'-Dichlor-6'-sulfophenyl)-3-phenyl-5-iminopyrazolon | $Ca^{2+}$ | gelb |
| 54 | " | 1-(4'-Methyl-3'-sulfophenyl)-3-phenyl-5-iminopyrazolon | $Ca^{2+}$ | rotstichig gelb |
| 55 | " | 1-(4'-Methyl-2'-sulfophenyl)-3-phenyl-5-iminopyrazolon | $Ca^{2+}$ | rotstichig gelb |

| Bsp. | Diazokomponent | Kupplungskomponente | Me | Nuance |
|---|---|---|---|---|
| 56 | 1-Amino-4-chlor-5-methylbenzol-2-sulfonsäure | 1-(4'-Chlor-6'-methyl-2'-sulfophenyl)-3-phenyl-5-iminopyrazolon | $Ca^{2+}$ | rotstichig gelb |
| 57 | " | 1-(2'-Sulfophenyl)-3-phenyl-pyrazolon-5 | $Ca^{2+}$ | gelbstichig orange |
| 58 | " | 1-(2'-Chlor-5'-sulfophenyl)-3-phenyl-pyrazolon-5 | $Ca^{2+}$ | rotstichig gelb |
| 59 | " | 1-(4'-Chlor-3'-sulfophenyl)-3-phenyl-pyrazolon-5 | $Ca^{2+}$ | rotstichig gelb |
| 60 | " | 1-(4'-Chlor-2'-sulfophenyl)-3-phenyl-pyrazolon-5 | $Ca^{2+}$ | gelb |
| 61 | " | 1-(2',4'-Dichlor-5'-sulfophenyl)-3-phenyl-pyrazolon-5 | $Ca^{2+}$ | gelb |
| 62 | " | 1-(4'-Methyl-3'-sulfophenyl)-3-phenyl-pyrazolon-5 | $Ca^{2+}$ | rotstichig gelb |
| 63 | " | 1-(6'-Methyl-3'-sulfophenyl)-3-phenyl-pyrazolon-5 | $Ca^{2+}$ | rotstichig gelb |
| 64 | " | 1-(4'-Chlor-5'-methyl-2'-sulfophenyl)-3-phenyl-pyrazolon-5 | $Ca^{2+}$ | rotstichig gelb |
| 65 | " | 1-(3'-Sulfophenyl)-3-(4'-chlorphenyl)-pyrazolon-5 | $Ca^{2+}$ | rotstichit gelb |

| Bsp. | Diazokomponente | Kupplungskomponente | Me | Nuance |
|---|---|---|---|---|
| 66 | 1-Amino-4-chlor-5-methylbenzol-2-sulfonsäure | 1-(4'-Chlor-3'-sulfophenyl)-3-(4'-chlorphenyl)-pyrazolon-5 | $Ca^{2+}$ | rotstichig gelb |
| 67 | " | 1-(2',5'-Dichlor-4'-sulfophenyl)-3-(4'-chlorphenyl)-pyrazolon-5 | $Ca^{2+}$ | gelb |
| 68 | " | 1-(4'-Methyl-3'-sulfophenyl)-3-(4'-chlorphenyl)-pyrazolon-5 | $Ca^{2+}$ | rotstichig gelb |
| 69 | " | 1-(4'-Chlor-5'-methyl-2'-sulfophenyl)-3-(4-chlorphenyl)-pyrazolon-5 | $Ca^{2+}$ | rotstichig gelb |
| 70 | " | 1-(3'-Sulfophenyl)-3-(4'-methoxyphenyl)-pyrazolon-5 | $Ca^{2+}$ | rotstichig gelb |
| 71 | " | 1-(4'-Chlor-3'-sulfophenyl)-3-(4'-methoxyphenyl)-pyrazolon-5 | $Ca^{2+}$ | rotstichig gelb |
| 72 | " | 1-(2',5'-Dichlor-4'-sulfophenyl)-3-(4'-methoxyphenyl)-pyrazolon-5 | $Ca^{2+}$ | rotstichig gelb |
| 73 | " | 1-(4'-Chlor-5'-methyl-2'-sulfophenyl)-3-(4'-methoxyphenyl)-pyrazolon-5 | $Ca^{2+}$ | rotbraunstichig gelb |
| 74 | " | 1-(3'-Sulfophenyl)-3-(4'-nitrophenyl)-pyrazolon-5 | $Ca^{2+}$ | orange |
| 75 | 1-Amino-2-chlorbenzol-5-sulfonsäure | 1-(3'-Sulfophenyl)-3-methyl-5-iminopyrazolon | $Ca^{2+}$ | gelb |

| Bsp. | Diazokomponente | Kupplungskomponente | Me | Nuance |
|---|---|---|---|---|
| 76 | 1-Amino-2-chlorbenzol-5-sulfonsäure | 1-(4'-Chlor-3'-sulfophenyl)-3-methyl-5-iminopyrazolon | $Ca^{2+}$ | gelb |
| 77 | " | 1-(2'-Chlor-5'-sulfophenyl)-3-methyl-5-imino-pyrazolon | $Ca^{2+}$ | gelb |
| 78 | " | 1-(2',5'-Dichlor-4'-sulfophenyl)-3-methyl-5-iminopyrazolon | $Ca^{2+}$ | gelb |
| 79 | " | 1-(3'-Sulfophenyl)-3-phenyl-5-iminopyrazolon | $Ca^{2+}$ | gelb |
| 80 | " | 1-(2'-Sulfophenyl)-3-phenyl-pyrazolon-5 | $Ca^{2+}$ | rotstichig gelb |
| 81 | " | 1-(3'-Sulfophenyl)-3-phenyl-pyrazolon-5 | $Ca^{2+}$ | rotstichig gelb |
| 82 | " | 1-(2'-Chlor-5'-sulfophenyl)-3-phenyl-pyrazolon-5 | $Ca^{2+}$ | gelb |
| 83 | " | 1-(4'-Chlor-3'-sulfophenyl)-3-phenyl-pyrazolon-5 | $Ca^{2+}$ | rotstichig gelb |
| 84 | " | 1-(3'-Sulfophenyl)-3-(4'-chlorphenyl)-pyrazolon-5 | $Ca^{2+}$ | rotstichig gelb |
| 85 | " | 1-(4'-Chlor-3'-sulfophenyl)-3-(4'-chlorphenyl)-pyrazolon-5 | $Ca^{2+}$ | rotstichig gelb |

| Bsp. | Diazokomponente | Kupplungskomponente | Me | Nuance |
|---|---|---|---|---|
| 86 | 1-Amino-2-chlorbenzol-5-sulfonsäure | 1-(2',5'-Dichlor-4'-sulfophenyl)-3-(4'-chlorphenyl)-pyrazolon-5 | $Ca^{2+}$ | rotstichig gelb |
| 87 | " | 1-(3'-Sulfophenyl)-3-(4'-methoxyphenyl)-pyrazolon-5 | $Ca^{2+}$ | braunstichig gelb |
| 88 | " | 1-(2',5'-Dichlor-4'-sulfophenyl)-3-(4'-methoxyphenyl)-pyrazolon-5 | $Ca^{2+}$ | braunstichig gelb |
| 89 | " | 1-(3'-Sulfophenyl)-3-(4'-nitrophenyl)-pyrazolon-5 | $Ca^{2+}$ | orange |
| 90 | 2-Methoxyanilin-5-sulfonsäure | 1-(3'-Sulfophenyl)-3-methyl-5-iminopyrazolon | $Ca^{2+}$ | gelb |
| 91 | " | 1-(4'-Chlor-3'-sulfophenyl)-3-methyl-5-iminopyrazolon | $Ca^{2+}$ | gelb |
| 92 | " | 1-(2'-Chlor-5'-sulfophenyl)-3-methyl-5-iminopyrazolon | $Ca^{2+}$ | gelb |
| 93 | " | 1-(2',5'-Dichlor-4'-sulfophenyl)-3-methyl-5-iminopyrazolon | $Ca^{2+}$ | gelb |
| 94 | " | 1-(3'-Sulfophenyl)-3-phenyl-5-iminopyrazolon-5 | $Ca^{2+}$ | rotstichig gelb |
| 95 | " | 1-(2'-Sulfophenyl)-3-phenyl-pyrazolon-5 | $Ca^{2+}$ | rotstichig gelb |
| 96 | " | 1-(3'-Sulfophenyl)-3-phenyl-pyrazolon-5 | $Ca^{2+}$ | rotstichig gelb |

| Bsp. | Diazokomponente | Kupplungskomponente | Me | Nuance |
|---|---|---|---|---|
| 97 | 2-Methoxyanilin-5-sulfonsäure | 1-(2'-Chlor-5'-sulfophenyl)-3-phenyl-pyrazolon-5 | $Ca^{2+}$ | gelb |
| 98 | " | 1-(4'-Chlor-3'-sulfophenyl)-3-phenyl-pyrazolon-5 | $Ca^{2+}$ | stark rotstichig gelb |
| 99 | " | 1-(3'-Sulfophenyl)-3-(4'-chlorphenyl)-pyrazolon-5 | $Ca^{2+}$ | rotstichig gelb |
| 100 | " | 1-(4'-Chlor-3'-sulfophenyl)-3-(4'-chlorphenyl)-pyrazolon-5 | $Ca^{2+}$ | rotstichig gelb |
| 101 | " | 1-(2',5'-Dichlor-3'-sulfophenyl)-3-(4'-chlorphenyl)-pyrazolon-5 | $Ca^{2+}$ | rotstichig gelb |
| 102 | " | 1-(3'-Sulfophenyl)-3-(4'-methoxyphenyl)-pyrazolon-5 | $Ca^{2+}$ | rotbraunstichig gelb |
| 103 | " | 1-(2',5'-Dichlor-4'-sulfophenyl)-3-(4'-methoxyphenyl)-pyrazolon-5 | $Ca^{2+}$ | braunstichig gelb |
| 104 | " | 1-(3'-Sulfophenyl)-3-(4'-nitrophenyl)-pyrazolon-5 | $Ca^{2+}$ | orange |
| 105 | 4-Methoxyanilin-2-sulfonsäure | 1-(3'-Sulfophenyl)-3-methyl-5-iminopyrazolon | $Ca^{2+}$ | rotstichig gelb |
| 106 | " | 1-(4'-Chlor-3'-sulfophenyl)-3-methyl-5-iminopyrazolon | $Ca^{2+}$ | rotstichig gelb |

| Bsp. | Diazokomponente | Kupplungskomponente | Me | Nuance |
|---|---|---|---|---|
| 107 | 4-Methoxyanilin-2-sulfonsäure | 1-(3'-Sulfophenyl)-3-phenyl-5-iminopyrazolon | $Ca^{2+}$ | rotstichig gelb |
| 108 | " | 1-(2'-Sulfophenyl)-3-phenyl-pyrazolon-5 | $Ca^{2+}$ | orange |
| 109 | " | 1-(4'-Chlor-3'-sulfophenyl)-3-phenyl-pyrazolon-5 | $Ca^{2+}$ | rotstichig orange |
| 110 | " | 1-(3'-Sulfophenyl)-3-phenyl-pyrazolon-5 | $Ca^{2+}$ | orange |
| 111 | " | 1-(2',5'-Dichlor-3'-sulfophenyl)-3-(4'-chlorphenyl)-pyrazolon-5 | $Ca^{2+}$ | gelbstichig orange |
| 112 | 1-Amino-3-chlor-4-methyl-benzol-6-sulfonsäure | 1-(3'-Sulfophenyl)-3-methyl-5-iminopyrazolon | $Ca^{2+}$ | gelb |
| 113 | " | 1-(4'-Chlor-3'-sulfophenyl)-3-phenyl-5-iminopyrazolon | $Ca^{2+}$ | gelb |
| 114 | " | 1-(2'-Sulfophenyl)-3-phenylpyrazolon-5 | $Ca^{2+}$ | rotstichig gelb |
| 115 | " | 1-(2'-Chlor-5'-sulfophenyl)-3-(4'-chlorphenyl)-pyrazolon-5 | $Ca^{2+}$ | rotstichig gelb |
| 116 | 1-Amino-4-N-acetylamino-5-methoxybenzol-2-sulfonsäure | 1-(3'-Sulfophenyl)-3-methyl-5-iminopyrazolon | $Ca^{2+}$ | gelb |
| 117 | " | 1-(2'-Sulfophenyl)-3-phenylpyrazolon-5 | $Ca^{2+}$ | rotstichig gelb |

| Bsp. | Diazokomponente | Kupplungskomponente | Me | Nuance |
|---|---|---|---|---|
| 118 | 6-Methoxy-4-nitro-anilin-3-sulfonsäure | 1-(3'-Sulfophenyl)-3-methyl-5-imino-pyrazolon | $Ca^{2+}$ | rotstichig gelb |
| 119 | " | 1-(2'-Sulfophenyl)-3-phenylpyrazolon-5 | $Ca^{2+}$ | orange |
| 120 | 2-Nitroanilin-4-sulfonsäure | 1-(3'-Sulfophenyl)-3-methyl-5-imino-pyrazolon | $Ca^{2+}$ | gelb |
| 121 | " | 1-(2'-Sulfophenyl)-3-phenyl-pyrazolon-5 | $Ca^{2+}$ | rotstichig gelb |

Beispiel 121-154

Ferner wurde 1-Amino-3-chlor-4-methylbenzol-6-sulfonsäure auf die in den Beispielen 5-15, 17-20, 22-39 genannten Kupplungskomponenten nach den in den Beispielen 1-4 angegebenen Verfahren gekuppelt.

Man erhält grünstichig gelbe bis rotstichig orange Produkte.

Beispiel 155-161

4-Ethoxyanilin-2-sulfonsäure wurde mit den in Beispielen 105-111 genannten Kupplungskomponenten analog den Vorschriften von Beispiel 1-4 umgesetzt. Man erhält rotstichig gelbe bis rotstichig orange Pigmente.

Beispiel 162

Transparente Einfärbung in PVC-P:

0,1 Teil Gelbpigment, hergestellt nach Beispiel 1, werden mit 100 Teilen PVC-Compound in einer langsam laufenden Labormischvorrichtung vermischt, auf das laufende Labor-Mischwalzwerk gegeben, homogenisiert und als Fell abgezogen.

Man erhält gelbe transparente Färbungen mit ausgezeichneter Lichtbeständigkeit.

Beispiel 163

Gedeckte Einfärbung in PVC-P:

0,2 Teile Gelbpigment, hergestellt nach Beispiel 42, werden zusammen mit 10 Teilen Titandioxid (Rutiltyp) mit 100 Teilen PVC-Compound vermischt und bei 160 ° C homogenisiert. Das vom Laborwalswerk abgezogene Fell hat eine deckende, gelbe Farbnuance. Die Färbungen zeigen eine sehr gute Migrations- und Lichtechtheit.

Beispiel 164

Transluzente und deckende Färbungen in HD-Polyethylen und Polypropylen:

100 Teile eines handelsüblichen Polyethylen-Granulates werden mit 0,2 Teilen Gelbpigment aus Beispiel 24 in einer langsam laufenden Mischtrommel gemischt. Das erhaltene Granulat wird über einen Extruder bei 170 ° C homogenisiert und zu flachen Bändern abgezogen, erneut granuliert und auf einer Schneckenspritzgießmaschine bei Temperaturen oberhalb 200 ° C verspritzt. Bei Erhöhung der Spritztemperatur von 200 ° C auf 320 ° C läßt sich keine Veränderung der Farbnuance feststellen.

Gleiche Ergebnisse werden in deckenden Einfärbungen mit Titandioxid (Rutiltyp) in HD-PE und in kristallinem Polypropylen ebenfalls als transparente und deckende Pigmentierungen erreicht.

Beispiel 165

Einfärbung von Polystyrol (PS) und mit Butadien modifiziertem Polystyrol (SB):

0,1 Teil Gelbpigment, hergestellt nach Beispiel 65, werden mit 0,5 Teilen Titandioxid (Rutiltyp) und 100 Teilen PS-Granulat (SB-Granulat) gemischt und auf einer Schneckenspritzgießmaschine bei erhöhtem Staudruck verspritzt. Man erhält Formteile mit einer stark rotstichig gelben, brillanten Nuance und gleichmäßiger Pigmentverteilung.

Beispiel 166

Einfärbung von ABS:

0,5 Teile Gelbpigment aus Beispiel 21 werden mit 4 Teilen Titandioxid (Rutiltyp) und 100 Teilen ABS-Pulver vermischt, im Stempelkneter bei 180 ° C plastifiziert, homogenisiert über ein Walzwerk ausgetragen, nach den üblichen Methoden granuliert und auf einer Schneckenspritzgießmaschine zu Formteilen mit einem leuchtend gelbem Farbton gespritzt. Bei Verarbeitungstemperaturen von 220 ° C bis 280 ° C und langen Verweilzeiten sind keine Farbtonänderungen feststellbar.

Gleich gute Ergebnisse werden in Kunststoffblends der Zusammensetzung ABS/Polycarbonat erreicht.

Beispiel 167

Einfärbung von Polycarbonat (PC) und Polycarbonat/Polybutylenterephthalat (PC/PBT):

0,2 Teile Gelbpigment, hergestellt nach Beispiel 2, werden mit einem handelsüblichen Polycarbonat trocken gemischt, auf einem Zweiwellenextruder bei 290 °C geschmolzen und dabei das Pigment dispergiert. Das homogen angefärbte PC wird erneut granuliert und das Granulat nach den üblichen Methoden des Spritzgießverfahrens bei Temperaturen bis zu 340 °C verarbeitet. Farbtonänderungen der grünstichig gelb gefärbten Formteile sind bei verschiedenen Temperaturen nicht zu beobachten.

Auch in PC/PBT ist bei Verarbeitungstemperaturen von 250 °C bis 290 °C das Pigment ohne Änderung der Nuance hitzebeständig. Auffallend ist ferner eine gute Kraftstoffbeständigkeit.

**Patentansprüche**

**1.** Azofarblacke der Formel

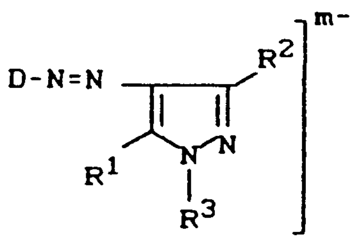 $\frac{m}{l}$ $M^{l+}$ (I)

in der

D = 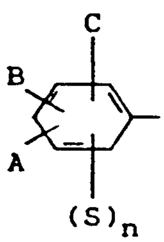 oder 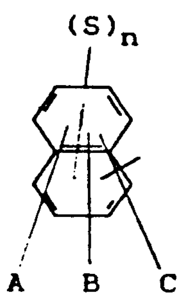 ,

$R^1$ = -OH oder $-NR^4R^5$,

$R^2$ = 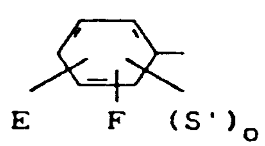 oder 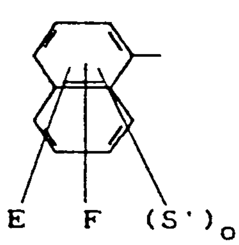

und für den Fall, daß $R^1$ = $NR^4R^5$

zusätzlich H oder Carboxylat, Alkyl

$R^3$ = 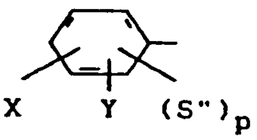 oder 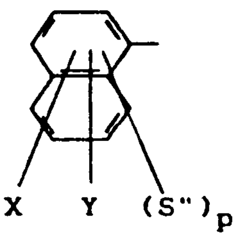 ,

| | |
|---|---|
| $R^4$, $R^5$ = | H, Alkyl, Cycloalkyl, Aralkyl, Aryl, wobei die genannten Kohlenwasserstoffreste substituiert sein können, |
| S, S', S'' = | Carboxylat, Sulfonat, |
| A, B, C, E, F, X, Y = | H, $-CF_3$, Halogen, $-NO_2$, -CN, $R^6$, $-OR^6$, $-NR^6R^7$, $-NH_2$, $-SO_2NH_2$, $-SO_2NR^6R^7$, $-CONH_2$, $-CONR^6R^7$, $-NHCOR^6$, |
| M = | Calcium, |
| n, o, p = | 0, 1, 2, |
| m = | n + o + p und für den Fall, daß $R^2$ = - COOH, n + o + p + 1, mit der Bedingung 1 ≦ m ≦ 3, |
| 1 = | Wertigkeit von M, |
| $R^6$, $R^7$ = | Alkyl, Cycloalkyl, Aralkyl, Aryl, wobei die genannten Kohlenwasserstoffreste substituiert sein können, |

**2.** Azofarblacke gemäß Anspruch 1, bei denen D für

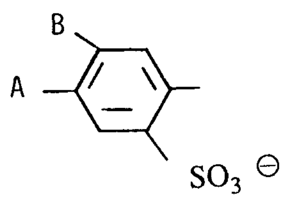

steht, wobei A und B die in Anspruch 1 angegebene Bedeutung haben.

**3.** Azofarblacke gemäß den Ansprüchen 1-2, bei denen
$R^1$ = OH oder $-NH_2$.

**4.** Azofarblacke gemäß den Ansprüchen 1-3, bei denen

$R^2$ = 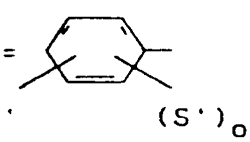

wobei
E' = H, Cl, Br, $-CH_3$, $-C_2H_5$, $-OCH_3$, $-OC_2H_5$, $-NHCOCH_3$, $-NO_2$.

**5.** Azofarblacke gemäß den Ansprüchen 1-4, bei denen

$R^3$ = 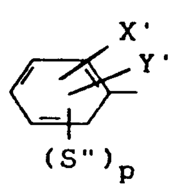

wobei

X' = H, -Cl,-Br, $-CH_3$, $C_2H_5$,

Y' = H, -Cl, -Br, $-OCH_3$, $-OC_2H_5$, 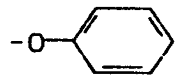.

**6.** Azofarblacke gemäß dem Anspruch 5, bei dem S" Sulfonat bedeutet.

**7.** Azofarblacke gemäß den Ansprüchen 1-6, bei denen S, S' und S" Sulfonat bedeuten.

**8.** Azofarbblack der Formel

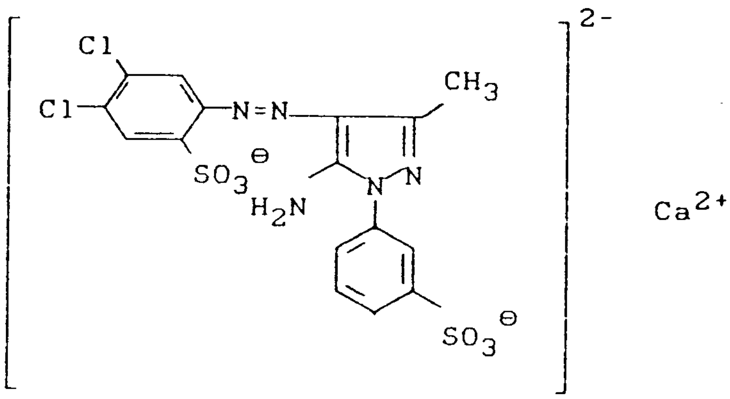

**9.** Verfahren zum Pigmentieren, dadurch gekennzeichnet, daß man Azofarblacke gemäß den Ansprüchen 1-7 verwendet.

**10.** Verfahren zum Pigmentieren von Kunststoffen gemäß Anspruch 9.

## Claims

**1.** Azo lakes of the formula

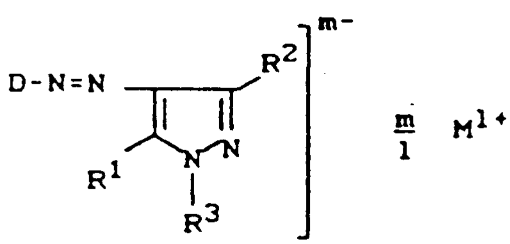 (I)

in which

D = 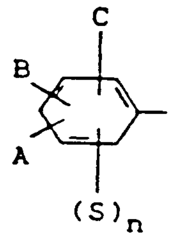 or 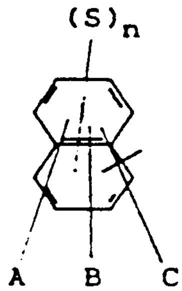

$R^1$ = -OH or $-NR^4R^5$,

$R^2$ = 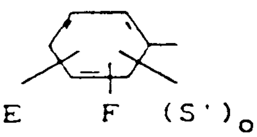 or 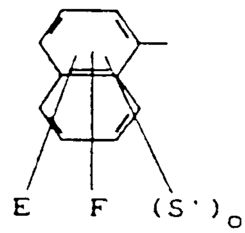

and when $R^1 = -NR^4R^5$
additionally H or carboxylate, alkyl

$R^3$ = 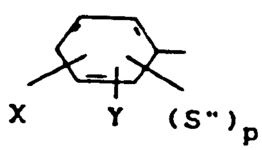 or 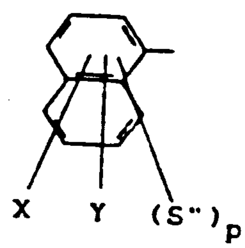

| | |
|---|---|
| $R^4$, $R^5$ = | H, alkyl, cycloalkyl, aralkyl, aryl, each of which hydrocarbon radicals can be substituted, |
| S, S', S'' = | carboxylate, sulphonate, |
| A, B, C, E, F, X, Y = | H, $-CF_3$, halogen, $-NO_2$, -CN, $R^6$, $-OR^6$, $-NR^6R^7$, $-NH_2$, $-SO_2NH_2$, $-SO_2NR^6R^7$, $-CONR^6R^7$, $-NHCOR^6$, |
| M = | calcium, |
| n, o, p = | 0, 1, 2, |
| m = | n + o + p and when $R^2$ = -COOH, n + o + p + 1, with the condition $1 \leqq m \leqq 3$, |
| 1 = | valency of M, |
| $R^6$, $R^7$ = | alkyl, cycloalkyl, aralkyl, aryl, each of which hydrocarbon radials can be substituted, |

**2.** Azo lakes according to Claim 1, in which D represents

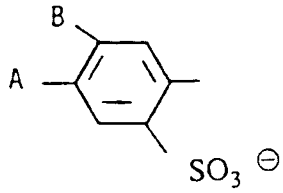

where A and B have the meaning given in Claim 1.

**3.** Azo lakes according to Claims 1-2, in which
$R^1$ = OH or $-NH_2$.

**4.** Azo lakes according to Claims 1-3, in which

$R^2$ = 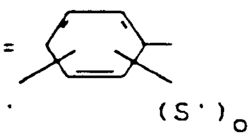

where
E' = H, Cl, Br, $-CH_3$, $-C_2H_5$, $-OCH_3$, $-OC_2H_5$, $-NHCOCH_3$, $-NO_2$.

**5.** Azo lakes according to Claims 1-4, in which

$R^3$ = 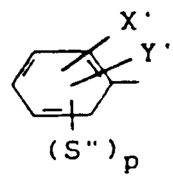

where
X' = H, -Cl, -Br, $-CH_3$, $C_2H_5$,

Y' = H, -Cl, -Br, $-OCH_3$, $-OC_2H_5$, 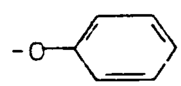 .

**6.** Azo lakes according to Claim 5 in which S'' denotes sulphonate.

**7.** Azo lakes according to Claims 1-6, in which S, S' and S'' denote sulphonate.

**8.** Azo lake of the formula

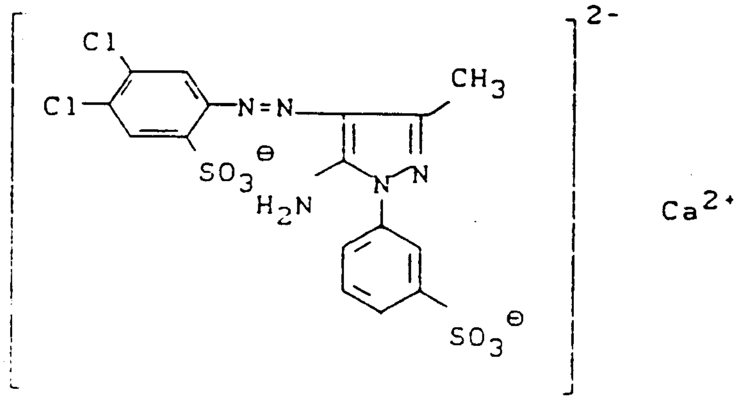

9. Process for pigmenting, characterised in that azo lakes according to Claims 1-7 are used.

10. Process for pigmenting plastics according to Claim 9.

## Revendications

1. Pigments laqués azoïques de formule

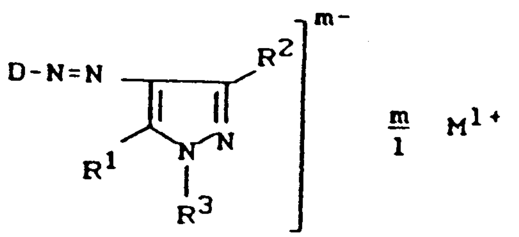

(I)

dans laquelle

D = 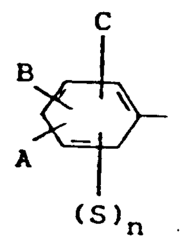 ou 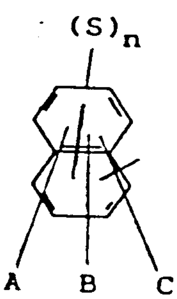 ,

$R^1$ = -OH ou $-NR^4R^5$,

$R^2$ = 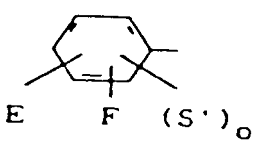 ou 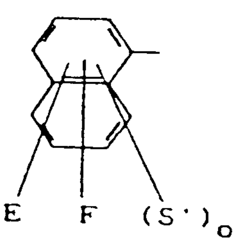

et en outre, au cas où $R^1$ représente $-NR^4R^5$, H ou un groupe carboxylate, alkyle,

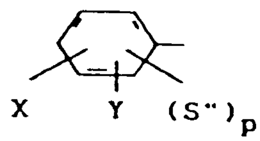 ou 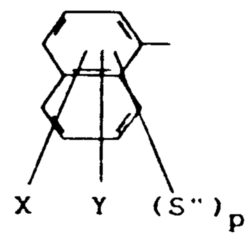 ,

$R^4$, $R^5$ = H, un reste alkyle, cycloalkyle, aralkyle, aryle, les restes hydrocarbonés mentionnés pouvant être substitués,
S, S', S'' = carboxylate, sulfonate,
A, B, C, E, F, X, Y = H, $-CF^3$, un halogène, $-NO_2$, -CN, $R^6$, $-OR^6$, $-NR^6R^7$, $-NH_2$, $-SO_2NH_2$, $-SO_2NR^6R^7$, $-CONH_2$, $-CONR^6R^7$, $-NHCOR^6$,
M = calcium,
n, o, p = 0, 1, 2,
m = n + o + p et, au cas où $R^2$ est un groupe -COOH,
n + o + p + 1 avec la condition
$1 \leqq m \leqq 3$,
1 = valence de M,
$R^6$, $R^7$ = alkyle, cycloalkyle, aralkyle, aryle, les restes hydrocarbonés mentionnés pouvant être substitués.

**2.** Pigments laqués azoïques suivant la revendication 1, dans lesquels D représente

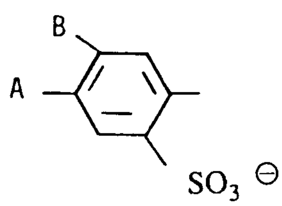

où A et B ont la définition indiquée dans la revendication 1.

**3.** Pigments laqués azoïques suivant les revendications 1-2, dans lesquels $R^1$ = OH ou $-NH_2$.

**4.** Pigments laqués azoïques suivant les revendications 1-3, dans lesquels

$R^2$ = 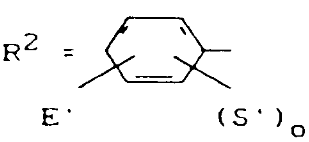

où
E' = H, Cl, Br, $-CH_3$, $-C_2H_5$, $-OCH_3$, $-OC_2H_5$, $-NHCOCH_3$, $-NO_2$.

**5.** Pigments laqués azoïques suivant les revendications 1 à 4, dans lesquels

$R^3$ = 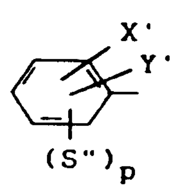

où

X' = H, -Cl, -Br, $-CH_3$, $C_2H_5$,

Y' = H, -Cl, -Br, $-OCH_3$, $-OC_2H_5$, 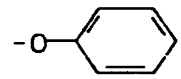.

**6.** Pigments laqués azoïques suivant la revendication 5, dans lesquels S'' est un groupe sulfonate.

**7.** Pigments laqués azoïques suivant les revendications 1-6, dans lesquels S, S' et S'' désignent un groupe sulfonate.

**8.** Pigment laqué azoïque de formule

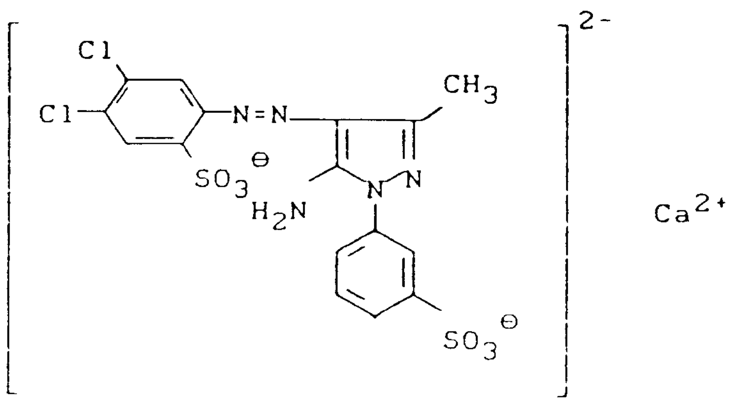

**9.** Procédé de pigmentation, caractérisé en ce qu'on utilise des pigments laqués azoïques suivant les revendications 1 à 7.

**10.** Procédé suivant la revendication 9 pour la pigmentation de matières plastiques.